# EUROPEAN PATENT APPLICATION

(11) **EP 2 143 756 A1**
(43) Date of publication of application: **13.01.2010**
(21) Application number: 09164959.0
(22) Date of filing: 08.07.2009
(51) Int. Cl.: C08L 19/00, C08C 1/14, C08J 3/16, C08J 11/06, E04D 1/10, E04D 1/22, E04D 3/18

(54) **Thermoplastic Roofing Membranes**

(30) Priority: 11.07.2008 US 134581 P; 30.12.2008 US 203913 P; 17.06.2009 US 456487
(71) Applicant: Rohm and Haas Company, Philadelphia, PA 19106-2399 (US)
(72) Inventor: Cruz, Carlos A., Holland, PA 18966 (US); Lau, Willie, Lower Gwynedd, PA 19002 (US); Rokowski, Joseph M., Barto, PA 19504 (US)
(74) Representative: Kent, Venetia Katherine

(57) **Abstract**

The present invention provides thermoplastic roofing membranes comprising particles of crosslinked rubber and an aqueous (co)polymer dispersion. The thermoplastic roofing membranes are formed by combining particles of crosslinked rubber and a suspension polymer dispersion, or a coagulated aqueous latex (co)polymer dispersion, to form a mixture in aqueous dispersion, which aqueous dispersion mixture is subjected to solid state shear pulverization to form materials that can be processed as thermoplastics at crosslinked rubber concentrations of from 10 wt.% to as high as 95 wt.%, based on the total solids of the material. The method may further comprise kneading the pulverized product, followed by extrusion to form roofing membranes.

## Description

This invention claims priority to United States Provisional Application No.61/203,913 filed December 30, 2008.

The present invention relates to a new roofing membrane material made at least in part from recycled waste materials. More particularly, it relates to a thermoplastic roofing membrane from crosslinked rubber and an aqueous polymer dispersion. The crosslinked rubber may be waste rubber vulcanizate, such as from waste tires.

This invention was made under a joint research agreement between the Rohm and Haas Company of Philadelphia, PA and the State Key Laboratory of Polymer Materials Engineering at Sichuan University of Chengdu, Peoples Republic of China.

One object of the present invention is to develop useful roof membrane materials from recyclable waste materials. Rubber articles, particularly crosslinked or vulcanized rubber, would be a particularly attractive starting material. The desire to find new uses for waste motor vehicle tires is particularly acute because they are so numerous, and their disposal presents problems. They are not easily broken down in landfills, and disposal of the tires by incineration carries with it concerns about atmospheric contamination by particulate emissions and potentially harmful compounds. Waste tires have found limited use, for example, as fuel in cement-making operations; as fillers (when finely ground) in new tires, outdoor athletic surfaces and road asphalt; or as mulch.

Reusing tire rubber as a raw material presents difficulties, particularly when the desired end product is thermoplastic, because GTR is a crosslinked thermoset composition. For example, extruded articles made from pure ground tire rubber are weak and inflexible because the grains of the ground tire cannot fuse well together as they are a thermoset composition. When ground tire is added to thermoplastic compositions as a filler, there is an upper limit of ground tire content before physical properties are impaired, and this upper limit is approximately 5-10% ground tire rubber. The same is true when ground tire rubber is used in new tires.

One improvement in the processing of waste vulcanized rubber comprises solid-state shear pulverization (S³P). S³P is a milling method where the particle size reduction is effected by tear, shear, abrasion, or attrition and is often carried out under ambient conditions (see, for example, Chapters 2 and 3, Solid-State Shear Pulverization, K. Khait and S. Carr, Technomic Publishing Company, Inc. 2001). In addition to size reduction, S³P has been demonstrated to induce mixing or compatibilizing of multicomponent mixtures as well as mechanochemistry as a result of radicals generated from the rupture of carbon-carbon bonds. Several types of S³P processing technology and equipment have been developed since the 1970s, including the Berstorff pulverizer, Extrusion Pulverization, Rotating Grinding Mill, and Pan Mill (Polymer Engineering and Science, June 1997, Vol. 37, No. 6, 1091-1101; Plastics, Rubber and Composites Processing and Applications 1996, Vol. 25, No. 3, 152-158). Both the rotating grinding mill and the pan mill comprise a fixed surface and a rotating surface with each having different designs of the contact surfaces. However, intimate mixing of different solid materials is not easily achieved using these solid state pulverizing techniques without the use of high temperatures to produce molten materials.

There has been substantial effort in recycling or recovering waste tires by mixing with a solid thermoplastic, such as polyethylene, to convert the rubber tire to a material that can be processed. S³P has been applied to such mixtures. However, this approach requires melt processing of the thermoplastic/rubber mixture at high temperature along with numerous processing additives. Such techniques are not practical, and are not utilized, in manufacturing roof membranes. Other known methods include the preparation of polyolefin-grafting-polar monomer copolymer by mechanochemical methods, and preparing rubber powder with high surface activity from waste tire rubber, which can be used to form polymer/ rubber powder composites. Again, these approaches do not find utility in roof membranes.

Additionally, there have been attempts to combine copolymer resins with GTR in a cold blend. For example, Korean Patent Application Publication Nos. 2001-0065946 and 2001-0099223, to Choe et al*,* disclose a method of producing a water-resistant and durable waterproof rubber sheet from GTR and an alkyl-epoxy-amino copolymer. Such methods, however, fail to meet the need for methods to produce useful thermoplastic roof membrane materials from recycled thermoset rubber and a thermoplastic polymer, where the materials comprise > 10% recycled rubber and take full advantage of the properties of the constituent polymers.

Although waste rubber tires have received much attention, the problem of recycling rubber remains far more reaching than waste tires. There remains a need for methods to combine thermoset polymers, like crosslinked rubber, with thermoplastic polymers, such that the new composite materials can be effectively reused as thermoplastic compositions, without loss of mechanical properties of the constituent polymers.

The inventors have endeavored to find a solution to the problem of producing commercially useful thermoplastic roof membranes from recycled thermoset rubber and a thermoplastic polymer that retains the mechanical properties of the constituent polymers even where the proportion of thermoset rubber is >10 wt.% of the composite.

### STATEMENT OF THE INVENTION

The present invention provides roof membranes made by a process comprising:
(a) coagulating one or more aqueous polymer dispersion to produce a coagulated polymer dispersion with a weight average particle size of from about 1 micron to about 1,000 microns;
(b) combining particles of one or more crosslinked rubber with the aqueous polymer dispersion, before or after coagulating the aqueous polymer dispersion, to form a mixture in aqueous dispersion;
(c) subjecting the aqueous dispersion mixture to solid state shear pulverization, thereby reducing the particle size of the crosslinked rubber and producing a pulverized mixture; and,
(d) reducing the moisture content of the pulverized mixture;
(e) forming the roof membrane;
wherein the coagulating of the one or more aqueous polymer dispersion may be carried out either prior to combining with the particles of crosslinked rubber, or in the presence of the particles of the crosslinked rubber.

In one embodiment of the invention, the process for making the roof membrane further comprises extruding the pulverized mixture to form the roof membrane.

In another embodiment, the crosslinked rubber is obtained, at least in part, from recycled tires, with a particle size range of 43 micron sieve particle size (325 mesh) or more, or 11,100 micron sieve particle size (2 mesh) or less, or 203 micron sieve particle size (60 mesh) or more, or 3,350 micron sieve particle size (6 mesh) or less.

In yet another embodiment, the aqueous polymer dispersion that is coagulated is obtained from an emulsion polymer dispersion, preferably, an acrylic or styrene-acrylic emulsion polymer.

In a different embodiment, the coagulated aqueous polymer dispersion is obtained from the waste stream of an emulsion polymer manufacturing facility.

In yet still another embodiment of the invention, reducing the moisture content of the pulverized mixture comprises isolating the solid content of the pulverized mixture.

In a further embodiment of the invention, the solid state shear pulverization comprises pan milling or disk milling.

In still further another embodiment of the invention, the coagulated aqueous polymer dispersion comprises (co)polymers having polymerized units of one or more functional monomers with functionality chosen from carboxy acid functionality, phosphorus acid functionality, hydroxy functionality, amine functionality, acetoacetoxy functionality, silyl functionality, epoxy functionality, cyano functionality, isocyanate functionality, and combinations thereof.

In another different embodiment, the roof membrane is further crosslinked during processing, which processing comprises one or more of kneading, or extrusion, or two-roll milling, or heat molding, or compression molding.

In still another different embodiment, thermoplastic processing forms a sheet or film and the methods further comprise laminating the sheets or film with other sheets, films or lamina. Accordingly, the shapeable roof membrane may comprise multilayer articles, multilayer roofing materials, or multilayer roofing membranes having the shapeable roof membrane as one or more layer. Accordingly, the process provides multilayer articles, laminates, or roofing materials, having the roof membrane as one or more layer.

In yet another different embodiment, the process of making the roof membrane further comprises coating the membrane with a white coating or overlaying or laminating an acrylic sheet or PVC sheet or foil sheet on the roof membrane.

In another aspect of the invention, the roof membrane is made by a process comprising:
(a) combining particles of one or more crosslinked rubber with an aqueous polymer dispersion to form an aqueous dispersion mixture in aqueous dispersion;
(c) subjecting the aqueous dispersion mixture to solid state shear pulverization;
(d) reducing the moisture content of the pulverized mixture; and
(e) forming the roof membrane;
wherein the aqueous polymer dispersion is obtained by suspension polymerization.

Thermoplastic roof membranes of the present invention are obtained from recycled thermoset rubber and thermoplastic polymer by a process in which an aqueous slurry of a suspension polymer or coagulated latex comprising a thermoplastic polymer is co-milled with a thermoset crosslinked rubber under ambient conditions, such that the product can be easily isolated and processed into a roof membrane.

Particularly suitable roof membranes are obtained when acrylic polymers and crumb rubber tires are used as the thermoplastic and thermoset polymers, respectively. The roof membranes made therefrom may comprise >10%, and up to 95% of thermoset rubber. The wet milling method is low cost, efficient, and operates with good heat dissipation capacity and low fouling of the equipment. Because latex particles are much smaller than coarse grade GTR (approximately three orders of magnitude different: 150 nm vs. 150 microns), slurries prepared by dispersing GTR with conventional latexes tend to phase separate, with the respective particles unchanged. Latex polymers, such as emulsion polymers, may be used by coagulating the latex polymer either before or after mixing with the thermoset rubber particles. Coagulation of the latex polymer particles produces polymer particles with average particle size ranging from about 1 micron to about 1,000 microns, which is in the general size range of the starting rubber particles, and enables intimate mixing of the components to form a slurry. Also suitably, polymers made from suspension polymerization can be used, since they are readily synthesized in the appropriate particle size range described above.

The slurry provides a uniform mixture of the crumb tire rubber and the acrylic polymer that can be readily introduced into the mill where the components are wet co-milled in an apparatus normally associated with solid state milling. This technique subjects the slurry components to intimate mixing under high shear which accentuates chemical and/or mechanical interaction between them. Additionally, this wet milling facilitates isolation of the product mixture of latex polymer with crosslinked rubber or GTR, even by conventional methods such as centrifugation and filtration which does not generally work with commercial latexes because they are generally colloidally stable and at a particle size range that cannot be isolated readily by centrifugation and filtration.

The roof membranes of the present invention may be made wholly, or partly, from waste products or recycled materials. For example, the thermoset rubber may be ground tire rubber (GTR) derived from waste motor vehicle tires, and the thermoplastic polymer may be derived from latex (co)polymers obtained from a waste stream, such as from an emulsion polymer manufacturing facility.

As used herein, the term "ground tire rubber" (GTR) refers to a thermoset rubber material in finely ground form, such as crumb rubber, for the purpose of reuse. This material is predominantly comprised of crosslinked rubber from waste tires, but may include other waste rubber from other sources. GTR is supplied commercially in many particle size ranges, with the broadest classes of GTR being generally referred to as "ground rubber" (crumb rubber of 1,520 micron sieve particle size, i.e. 10 mesh, or smaller), and "coarse rubber" (comprising particles of one quarter inch and larger, and with a maximum size of 13,000 mesh sieve particle size (one half inch) in the largest dimension).

As used herein, the term "aqueous polymer dispersion" means a dispersion of polymeric particles in water, which particles exclude the crosslinked rubber particles.

As used herein, the term "latex polymer" refers to a dispersion of polymeric microparticles (particle size <1 micron) in water.

As used herein, the term "emulsion polymer" means a polymer made in water or a substantially aqueous solution by an emulsion polymerization process.

As used herein, the term "suspension polymer" means a polymer by a suspension polymerization process.

As used herein, the term "pulverization" refers to any process that results in a reduction in the particle size of solid particulate matter, effected by tear, shear, abrasion, or attrition.

As used herein, the term "solid state shear pulverization" or "S³P" refers to a non-melting pulverization of a material in the solid state to impart intense shear stress to the solid particles, and which may be carried out with the material at ambient temperatures or with cooling.

As used herein, the term "forming" refers to an operation that manipulates a thermoplastic material to give a shaped article.

Unless otherwise indicated, any term containing parentheses refers, alternatively, to the whole term as if no parentheses were present and the term without them (i.e. excluding the content of the parentheses), and combinations of each alternative. Thus, the term (co)polymer refers to a homopolymer or copolymer. Further, (meth)acrylic refers to any of acrylic, methacrylic, and mixtures thereof.

As used herein, unless otherwise indicated, the word "copolymer" includes, independently, copolymers, terpolymers, block copolymers, segmented copolymers, graft copolymers, and any mixture or combination thereof.

As used herein, the phrase "alkyl" means any aliphatic alkyl group having one or more carbon atoms, the alkyl group including n-alkyl, s-alkyl, i-alkyl, t-alkyl groups or cyclic aliphatics containing one or more 5, 6 or seven member ring structures.

As used herein, the phrases "(C₃-C₁₂)-" or "(C₃-C₆)-" and the like refer to compounds containing 3 to 12 carbon atoms and 3 to 6 carbon atoms, respectively.

The term "unsaturated carboxylic acid monomers" or "carboxy acid monomers" includes, for example, (meth)acrylic acid, crotonic acid, itaconic acid, 2-methyl itaconic acid, α,β-methylene glutaric acid, monoalkyl fumarates, maleic monomers; anhydrides thereof and mixtures thereof. Maleic monomers include, for example, maleic acid, 2-methyl maleic acid, monoalkyl maleates, and maleic anhydride, and substituted versions thereof.

The term "unsaturated sulfonic acid monomers" includes, for example, 2-(meth)acrylamido-2-methylpropanesulfonic acid and para-styrene sulfonic acid.

As used herein, the phrase "aqueous" or "aqueous solution" includes water and mixtures composed substantially of water and water-miscible solvents.

As used herein, "wt%", "wt.%" or "wt. percent" means weight percent. As used herein, the phrase "based on the total weight of polymer composite solids" refers to weight amounts of any given ingredient in comparison to the total weight amount of all the non-water ingredients in the polymer composite (e.g., latex copolymers and ground tire rubber).

The singular forms "a," "an," and "the" include plural referents unless the context clearly dictates otherwise. The endpoints of all ranges directed to the same component or property are inclusive of the endpoint and independently combinable.

As used herein, unless otherwise indicated, the term "sieve particle size" refers to the particle size of a material that results from the sample passing through a sieve of the given particle size. For example, ground tire rubber milled so that it passes through a 203 micron sized sieve (60 mesh) is referred to as having a 203 micron sized sieve particle size, or, simply, a 203 micron sieve particle size. For a given material, a mesh sieve particle size will be larger than the weight average particle size.

The particle size and particle size distribution of the coagulated aqueous polymer dispersions described herein were measured using a Malvern Mastersizer 2000^{™} Particle Size Analyzer (Malvern Instruments Ltd., Malvern, Worcestershire, UK). This instrument uses a light scattering technique and the particle size obtained is a weight average particle size.

The crosslinked rubber may be any rubber that has been crosslinked and is not restricted to rubber obtained by grinding waste tires. For example, the crosslinked rubber may have been derived from one or more types of rubber selected from natural rubber, synthetic rubber, and derivatives thereof. Examples of synthetic rubber include diene-based polymers such as isoprene, cis-1,4-polyisoprene, styrene-butadiene, styrene-acrylonitrile-butadiene, acrylonitrile-butadiene, cis-1,4-polybutadiene, ethylene-propylene-diene-monomer rubber (EPDM), chloroprene rubber, halogenated butyl rubber, silicone rubber and the like.

Preferably, the crosslinked rubber of the composite material is a recycled rubber, and most preferably it is obtained, at least in part, from recycled rubber from ground motor vehicle tire polymer. Therefore, the rubber may be vulcanized (crosslinked) or hyperoxidized rubber and may contain one or more species such as crosslinking agent, sulfur, vulcanizing accelerator, antioxidant, ozone degradation inhibitor, preservative, process oil, zinc oxide (ZnO), carbon black, wax, stearic acid, and the like, as are often present in waste rubber products. Preferably, the input rubber has been pre-stripped of non-rubber content, such as for example, steel belt or cloth, as are often present in waste motor vehicle tires. Commercial sources of GTR are generally provided in this manner.

The present invention is not limited by the shape of the starting crosslinked rubber particles. The rubber for use in the S³P process may be, for example, in shredded form, rubber pellets, rubber strands, or particles such as crumb rubber, or a rubber powder, which particulate forms are available commercially and produced by methods known to those skilled in the art. Rubber particle sizes as introduced into the S³P process, although useable, are less practical above 11,100 micron sieve particle size (2 mesh). Generally, the rubber particle size ranges 7,000 micron sieve particle size (3 mesh) or less. The larger particle sizes may require further iterations of wet milling. Additionally, the speed of rotation of and the design of the contact surfaces can also impact the effectiveness of the wet milling. Preferably, the crosslinked rubber has a particle size of 3,350 micron sieve particle size (6 mesh) or less, or 150 micron sieve particle size (80 mesh) or more, or, more preferably, 203 micron sieve particle size (60 mesh) or more. The resulting particle size of the S³P milled rubber is generally the same size as that of the coagulated latex and, for larger starting rubber particle sizes, may range 2000 micron sieve particle size or less. Preferably, the resulting particle size of the S³P milled rubber is 100 micron sieve particle size or less, or 46 micron sieve particle size (300 mesh) or more, or 35 micron sieve particle size (400 mesh) or more.

The latex (co)polymer or suspension (co)polymer used in the composite material may comprise, as copolymerized units, ethylenically unsaturated monomers including, for example, α,β-ethylenically unsaturated monomers (e.g., primary alkenes); vinylaromatic compounds, such as styrene or substituted styrenes (e.g. α-methyl styrene); ethylvinylbenzene, vinylnaphthalene, vinylxylenes, vinyltoluenes, and the like; butadiene; vinyl acetate, vinyl butyrate and other vinyl esters; vinyl monomers such as vinyl alcohol, vinyl ethers, vinyl chloride, vinyl benzophenone, vinylidene chloride, and the like; allyl ethers; N-vinyl pyrrolidinone; vinylimidazole; olefins; vinyl alkyl ethers with C₃-C₃₀ alkyl groups (e.g., stearyl vinyl ether); aryl ethers with C₃-C₃₀ alkyl groups; C₁-C₃₀ alkyl esters of (meth)acrylic acid (e.g., methyl acrylate, methyl methacrylate, ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate); hydroxyalkyl (meth)acrylate monomers such as 2-hydroxyethyl acrylate, 2-hydroxyethyl methacrylate, 2-hydroxypropyl (meth)acrylate, 2-hydroxybutyl (meth)acrylate, and 1-methyl-2-hydroxyethyl (meth)acrylate; as well as the related amides and nitriles, such as (meth)acrylamide, substituted (meth)acrylamides (e.g., diacetone acrylamide) , or N-alkyl substituted (meth)acrylamides (e.g., octyl acrylamide and maleic acid amide); and acrylonitrile or methacrylonitrile; unsaturated vinyl esters of (meth)acrylic acid; multifunctional monomers (e.g., pentaerythritol triacrylate); monomers derived from cholesterol; ethylene; surfactant monomers (e.g., C₁₈ H₂₇ -(ethylene oxide)₂₀ methacrylate and C₁₂ H₂₅ -(ethylene oxide)₂₃ methacrylate); α,β-monoethylenically unsaturated monomers containing acid functionality (e.g., acrylic acid and methacrylic acid, acryloxypropionic acid, (meth)acryloxypropionic acid, itaconic acid, maleic acid or anhydride, fumaric acid, crotonic acid, monoalkyl maleates, monoalkyl fumarates, monoalkyl itaconates); acid substituted (meth)acrylates; sulfoethyl methacrylate and unsaturated sulfonic acid monomers; acid substituted (meth)acrylamides (e.g., 2-acrylamido-2-methylpropylsulfonic acid); basic substituted (meth)acrylates (e.g., dimethylaminoethyl methacrylate, tertiary-butylaminoethyl methacrylate); and (meth)acrolein.

The latex (co)polymer or suspension (co)polymer of the composite material may further comprise copolymerized functional monomers, or monomers subsequently functionalized, in order to impart preferred properties according to the desired end use of the composite material. Such monomers may include monomers with carboxy acid functionality (for example, ethylenically unsaturated carboxylic acid monomers), or phosphorus acid functionality (phosphorus acid monomers), or monomers with hydroxy functionality, or amine functionality, or acetoacetoxy functionality, or silyl functionality, or epoxy functionality, or cyano functionality, or isocyanate functionality. Examples of functional monomers include (meth)acrylic acid, glycidyl (meth)acrylate, phosphoethyl (meth)acrylate, hydroxyethyl (meth)acrylate, acetoacetoxyethyl (meth)acrylate, and the like. Acrylic latex polymers are especially well suited to the invention because of the variety of functional groups that can be readily incorporated into the polymer backbone.

In one embodiment, the latex (co)polymer or suspension (co)polymer of this invention comprises one or more copolymerized multi-ethylenically unsaturated monomers such as, for example, allyl methacrylate (ALMA), allyl acrylate, diallyl phthalate, 1,4-butylene glycol dimethacrylate, 1,2-ethylene glycol dimethacrylate, 1,6-hexanediol diacrylate, butadiene, trimethylolpropane triacrylate (TMPTA) and divinyl benzene. The multi-ethylenically unsaturated monomer can be effectively employed at levels as low as 0.1%, by weight based on the weight of the copolymer, preferably from 0.1 to 10%, or 0.1 to 5%, by weight based on the weight of the copolymer.

(Co)polymers that are suitable for use in the present invention include, but are not limited to, all-acrylic polymers; styrene-acrylic polymers; vinyl-acrylic polymers; vinyl acetate-ethylene polymers; natural rubber latex and derivatized natural rubber latex, such as epoxidized natural rubber latex; synthetic rubber polymers, such as isoprenes, butadienes such as styrene-butadiene or styrene-acrylonitrile-butadiene; silicone rubber; and combinations thereof. The (co)polymer may be made by any polymerization method, including, for example, solution polymerization, bulk polymerization, heterogeneous phase polymerization (including, for example, emulsion polymerization, mini-emulsion polymerization, micro-emulsion polymerization, suspension polymerization, dispersion polymerization, and reverse-emulsion polymerization), and combinations thereof, as is known in the art. The molecular weight of such polymer species may be controlled by the use of a chain regulator, for example, sulfur compounds, such as mercaptoethanol and dodecyl mercaptan. The amount of chain regulator, based on the total weight of all monomers used to make the (co)polymer, may range 20% or less, more commonly 7% or less. The molecular weight of the (co)polymer is preferably from about 5,000 to 2,000,000, or, more preferably, from 20,000 and 1,000,000.

The glass transition temperature (Tg) of the polymers is measured by differential scanning calorimetry (DSC). "T_{g}" is the temperature at or above which a glassy polymer will undergo segmental motion of the polymer chain. To measure the glass transition temperature of a polymer by DSC, the polymer sample is dried, preheated to 120°C, rapidly cooled to -100°C, and then heated to 150°C, at a rate of 20°C/minute while DSC data are collected. The glass transition temperature for the sample is measured at the midpoint of the inflection using the half-height method; cell calibration using an indium reference for temperature and enthalpy, as is known in the art. Preferably, the copolymer used in this invention has a Tg of from -40°C to +80°C, more preferably -10°C to +35°C, although the Tg of the copolymer used in this invention is not particularly limited.

In one embodiment, the latex (co)polymer or suspension polymer is obtained from the waste stream of an emulsion polymer or suspension polymer manufacturing facility. Advantageously, this allows the production of composite materials made wholly, or partly, from waste products or recycled materials.

The (co)polymer used in the composite material preferably comprises 5 wt.% or more, or 95 wt.% or less, or 10 wt.% or more, or 90 wt.% or less of the total solids of the composite, preferably 25 wt.% or more, or 75 wt.% or less, or 25-65%, more preferably 35-65%, or up to 50 wt.%.

Colloidally stable (co)polymers used in the composite material are coagulated, or flocculated, to produce a coagulated aqueous polymer dispersion wherein the particles are in the general size range of the starting rubber particles, preferably within one order of magnitude of the particle size of the rubber particles. In addition to providing better mixing of the latex polymer with the rubber particles, coagulation of the latex polymer also helps prevent fouling of the plates during the solid state shear pulverization. The latex (co)polymer may be coagulated before or after mixing with the rubber particles. Methods of coagulating an aqueous polymer dispersion are known in the art, and are not limited herein. Suitable methods of coagulation may include the addition of an acid, such as formic acid or sulfuric acid, or a salt, such as sodium chloride or iron (ferric) chloride. Other chemical coagulants may include alum, alumina, aluminium chlorohydrate, aluminium sulfate, calcium oxide, iron (ferrous) sulfate, magnesium sulfate, polyacrylamide, sodium aluminate, and sodium silicate, and the like; and natural product coagulants may include chitosan, moringa oleifera seeds, papain, strychnos seeds, and isinglass, among others. Preferably, the coagulated aqueous polymer dispersion has an average particle size in the range of from 1 micron to 5,000 microns, and more preferably, from 5 microns to 250 microns, and even more preferably, from 10 microns to 100 microns. Preferably, the coagulated aqueous (co)polymer dispersion is pumpable.

The coagulated aqueous dispersion or suspension polymer beads are combined with particles of the crosslinked rubber to form a mixture in aqueous dispersion, and the mixture subjected to S³P. Suitable techniques include those that can be used to pulverize the mixture as a slurry containing solid particulate matter, and thereby reducing the particle size of the rubber particles while they are in intimate contact with the coagulated polymer or suspension polymer. For example, techniques such as solid state shear extrusion, SSSE, which were designed with heating units and, in normal use, used to process the input materials in the molten state, may be used with aqueous slurry mixtures under ambient conditions. Thus, a number of techniques can be used, or adapted to be used, to practice the method of this invention, including, but not limited to, various milling techniques, such as rotating grinding mill, high shear solid state milling, disc milling, pan milling, stone milling, plast milling; as well as other pulverizing techniques, such as the Berstorff pulverizer, extrusion pulverization, solid state shear extrusion, and Brubender Extruder; and similar techniques.

The method of the present invention further includes reducing the moisture content of the pulverized slurry. This may comprise both dewatering the slurry and drying the remaining solid composite material. Dewatering the slurry, in turn, may include such processes as, for example, filtration of the solids to remove excess water, or centrifugation, as well as further reduction of the moisture content of the sample by wringing, or pressing, or freeze-drying. Conventional methods of drying can also be employed including, for example, the use of ovens or dryers such as vacuum dryers, air dryers, drum dryers, hand dryers, or fluid bed dryers. Preferably, the method further comprises thermoplastic processing of the pulverized aqueous dispersion, and further reduction of water content may occur during such processing, for example, by compressing the sample at temperatures above room temperature. Processing of the thermoplastic material, which may be carried out at elevated temperature, may include the steps of kneading and/or forming the shapeable composite material. Kneading may be accomplished using a two-roll mill, or by extrusion of the material, or, in some cases, at delivery to an injection molder. The forming process may include such techniques as calendering, compression molding, injection molding, or extrusion. Two-roll milling is a standard polymer processing operation often used in conjunction with compression molding to transform the material into a molded article. Production of roof membranes is conveniently accomplished by extrusion of the material into sheets of appropriate thickness.

The slurry mixture may additionally comprise various additives as desired or required for the roof membrane composite material, such as, for example, one or more of vulcanizing agent, antioxidant, UV-stabilizer, foaming agent, blowing agent, fire-retardant, colorant, filler, pigment, and processing aid. In one embodiment, the composite material may additionally comprise fillers in the form of, for example, powders, such as carbon black, or fibers, slivers or chips; or reinforcing materials, such as non-wovens, or scrim, and the like, as known in the art. Fire retardants modifiers or additives can be used in or on the polymer-rubber roof membrane, such as, for example, antimony compounds, phosphorous compounds, expandable graphite, vermiculite, glass fibers, ceramic fibers, chlorinated compounds, aluminum trihydrate, magnesium oxide, cementitious compounds, and films of noncombustible material such as metal foils.

The composite material can be further crosslinked during the heated processing stage to enhance the mechanical properties and water resistance of the roof membrane. The crosslinking can be effected by the functional groups as described above (hydroxy, glycidyl, acid, amine, etc) or by incorporation of a radical generator (peroxides, peresters, azo compounds, etc) that will create reactive sites under heated conditions.

In a particularly preferred embodiment, ground tire rubber of 203 micron sieve particle size (60 mesh) is added, on an equal solids basis, to a 10% solids aqueous dispersion of an acrylic latex copolymer, such as Rhoplex^{™} AC261 (available from Rohm and Haas Company, Philadelphia, PA), and the latex is coagulated in situ by the addition of a 40% solution of ferric chloride as described below in Example 1(a). The slurry is subjected to solid state shear pulverization as described in Example 2, then filtered and dried before being processed by extrusion, or, alternatively, by two-roll milling and compression molding, as described in Example 3(a) and 3(b) below, to produce the acrylic rubber composite sheet.

The shapeable composite materials of the present invention can be made into articles of any shape, such as sheets and films, or used as a molding or forming material. Being a thermoplastic, the shapeable composite material may be formed into a heat sealable membrane or articles such as hybrid products that comprise of multiple layers or segments with different properties, such as stiffness, having one or more layer or segment formed from shapeable composite materials of the present invention.

Films produced according to the present invention may be used in forming multilayer articles and laminates for many applications. Acrylic or vinyl polymers may be selected according to their glass transition temperature (Tg) for specific applications. In one embodiment of the invention, thermoplastic processing forms a sheet or film and the methods further comprise laminating the sheets or film with other sheets, films or lamina. Accordingly, the shapeable composites may comprise multilayer articles, laminates, roofing materials, or roofing membranes having the shapeable composite as one or more layer.

As a roofing material, in addition to a roof membrane, this invention may additionally find use as a modifier for EPDM roofing membrane, or a modifier for neoprene coatings, or in roofing shingles or roofing felt.

### EXAMPLES

### Example 1: Preparation of Polvmer/Rubber Slurry Mixture: 1(a) In-Situ Coagulation

A commercial acrylic latex polymer, Rhoplex^{™} AC261 latex (50% solids emulsion copolymer of butyl acrylate and methyl methacrylate; Rohm and Haas Company, Philadelphia, PA), and Ground Tire Rubber (203 micron sieve particle size; i.e. 60 mesh; from Lv Huan Rubber Powder Limited Company, Zhejiang, China), were used in the slurry mixture as follows: 1000 g of Rhoplex^{™} AC261 latex was diluted with 3500 g of water in a two gallon container. 500 g of Ground Tire Rubber was added gradually to the diluted latex, while stirring, over a 10 minute period. After the crumb tire rubber is dispersed in the latex dispersion, 37.6 g of a 40% solution of iron(III) chloride, FeCl₃, was added to the dispersion to initiate the coagulation of the latex. The stirring was continued for 15 minutes and the slurry mixture was allowed to equilibrate overnight. The coagulated mixture settled into a solid cake but can be redispersed readily into a flowable slurry with agitation. The particle size of the coagulated polymer solids was estimated by optical microscope to be around 10-200 microns. Additionally, the particle size and particle size distribution of the coagulated mixture was measured using a Malvern Mastersizer 2000^{™} Particle Size Analyzer (Malvern Instruments Ltd., Malvern, Worcestershire, UK). The result showed an overlapping bimodal distribution with the lower particle size distribution showing a broad distribution of particles from 1 micron to 1,000 microns with >80% between 2-200 microns and with a peak at ∼25 microns. The latter distribution was determined to be that of the coagulated latex polymer (see below, 1(b)).

### Preparation of Polymer/Rubber Slurry Mixture: 1(b) Pre-Coagulation of the Latex

In an alternative procedure, the slurry as described in Example 1a) was also prepared by coagulation of the latex followed by the addition of Ground Tire Rubber, as follows: 1000 g of Rhoplex^{™} AC261 latex (50% solids) was diluted with 3500 g of water in a two gallon container. 37.6 g of a 40% solution of FeCl₃ was added to the dispersion to initiate the coagulation of the latex. The stirring was continued for 15 minutes and the coagulated polymer dispersion was allowed to equilibrate overnight. 500 g of Ground Tire Rubber (203 micron sieve particle size; i.e. 60 mesh) was added gradually to the coagulated polymer dispersion with stirring over a 10 minute period. The particle size of the coagulated polymer solids was estimated by optical microscope to be around 10-200 microns. Additionally, the particle size and particle size distribution of the coagulated dispersion was measured using a Malvern Mastersizer 2000^{™} Particle Size Analyzer. The result showed a broad distribution of particles from 1 micron to 1,000 microns with >80% between 2-200 microns and with a peak at ∼25 microns.

### Example 2: Solid State Shear Pulverization (S³P) of Polymer/Rubber Slurry Mixture

The slurry from Example 1(a), for which coagulation of the latex was performed in situ with the Ground Tire Rubber, was processed further as described below, and summarized in Table 1.

Sample 2 was subjected to solid state shear pulverization under wet condition using a Pan Mill method as described in Plastics, Rubber and Composites Processing and Applications, 1996 Vol. 25, No. 3, 152-158; Polymer Engineering and Science, 1997, Vol. 37, No. 6, 1091-1101. In this case, the polymer/rubber slurry was diluted to 10% total solids and fed into the intake of the Pan Mill. The milling was carried out under ambient conditions with the moving pan rotating at 60 rpm. The gap between the pans was controlled by a fluid driving device to achieve efficient pulverization of the polymer/rubber mixture. The slurry was milled 5 times by reintroducing the discharge of the milled slurry back into the mill.

Sample 3 was similarly subjected to solid state shear pulverization under wet condition, except using a Disk Mill method. The disk mill is described in United States Patent No. 4,614,310 and the slurry passes through the mill just once. The milling was carried out under ambient conditions.

For comparative purposes, Table 1 includes samples that do not utilize solid state shear pulverization. In Sample 1, the slurry is cold blended (ambient temperature). Sample 4 is a commercial EPDM (ethylene-propylene-diene monomer) rubber roof membrane of 40 mil dry thickness. Samples 1-3 were further processed (below) to give membranes of 40 mil dry thickness.

### Example 3: Preparation of Polymer/Rubber Composite Roof Membranes:

### 3(a) 2-Roll Milling and Compression Molding

The milled or blended polymer/rubber slurry mixtures of Samples 1-3 were filtered using a 10 micron filter bag and the solid mixture was further wrung out to reduce the free water. The resulting moist solid (∼50-60% moisture content) was dried in a vacuum oven at 70°C for 2 days. The dried mixture solid (<5% moisture content) may optionally be processed in a two-roll mill at 190°C for 5 minutes and compression molded, for example, between steel plaques fitted with a 0.102, 0.127, or 0.203-cm thick (40, 50 or 80-mil thick), 25.4 cm by 25.4 cm (10 inch by 10 inch) frame at 190 °C for a total of 5 minutes: 3 minutes at low pressure (10-15 tons) and 2 minutes at high pressure (75 tons). Additional cooling may also be performed under pressure (75 tons) at room temperature for 5 minutes in a cool press fitted with circulating water.

### Example 3: Preparation of Polymer/Rubber Composite Roof Membranes: 3(b) Extrusion

The composite was extruded directly without the two-roll milling using a Haake counter-rotating conical twin screw, with two tapered 1.9 cm (3/4 inch) diameter screws rotating at 40 rpm. The main unit contained three heating zones (185-190-195°C) and various thermocouples and cooling hoses for temperature control. The material was extruded through a 5 cm (2 inch) wide lip die with a gap size of 0.102 cm (40 mils). Other extruders may be used, for example, such that the material may be extruded through a 6 inches die, or other die size of choice.

### Example 4: Properties of Polymer/Rubber Composite Article: 4(a) Mechanical Properties

Composite roofing membrane samples prepared by the process of Examples 1-3 were cut in a dog-bone fashion, so that a width of 0.35 cm (0.14 inches) was obtained, and a thickness of 0.102 cm (40 mils). Mechanical testing was carried out following the ASTM D-628 protocol on a Tinius Olsen H50KS tensile tester (Tinius Olsen Inc., Horsham, PA), using the Type 5 setting for rubbers. The crosshead rate was 0.76 cm/min (0.3 inches/minute), and a guage length of 0.76 cm (0.3 inches) was used. The test was run under controlled temperature of 23 °C and controlled relative humidity of 50 %. From this test, maximum tensile strength (stress), tensile strength at break, tear strength, and maximum elongation for the samples were determined (Table 1).

**Table 1: Mechanical Properties of Composite Roof Membranes¹ from AC-261 and GTR**

| **Sample** | **Composition / Preparation** | **Tensile Strength Max** **(psi)** | **Tensile Strength At Break** **(psi)** | **Tear Resistance** | **Elongation Max** **(%)** |
|---|---|---|---|---|---|
| 1 | GTR/AC-261 Cold Blend | 613 | 539 | 177 | 288 |
| 2 | GTR/AC-261 Pan Milled ² | 1182 | 1177 | 194 | 424 |
| 3 | GTR/AC-261 Disk Milled ³ | 922 | 893 | 221 | 403 |
| 4 | EPDM Rubber ⁴ | 1158 | 1151 | 240 | 838 |

| | | | | | |
|---|---|---|---|---|---|
| 1. Samples 1-3 utilize a 50/50 ratio of AC-261 polymer to GTR, by wt.% of solids, in the composite roof membrane. 2. The sample was run through the pan mill 5 times before isolating the solids and reducing the water content. 3. The sample was run through the disk mill once before isolating the solids and reducing the water content. 4. Firestone 40 mil EPDM Roofing Membrane. | | | | | |

The data show that when the crosslinked rubber and coagulated latex are cold blended (ambient temperature), with no solid state shear pulverization technique employed, (Sample 1) the composite roof membrane is much weaker in tensile strength and tear resistance than the inventive roof membranes (Sample 2 and 3) prepared using a pan milling and disk milling technique, respectively, which both advantageously use a solid state shear pulverization technique. Similar trends are seen for a range of polymer/rubber ratios, including 10/90, 25/75, 75/25, and 90/10.

### Example 5: Composite Roof Membranes Prepared from Latexes of Varying Polymer Composition

The composite roof membranes can be prepared with a range of other latex polymers including Rovace^{™} 661 (Vinyl Acetate/Butyl Acrylate, 55% solids; Rohm and Haas Company, Philadelphia, PA); Airflex^{™} 500 (Ethylene/Vinyl Acetate, 55% solids; Air Products and Chemicals, Inc., Allentown, PA); UCAR^{™} DM171 (Styrene/Butadiene Rubber, 50% solids; Dow Chemical Company, Midland, MI) and Rhoplex^{™} 2200 (Styrene/Acrylic, 50% solids; Rohm and Haas Company). The polymer/rubber slurry mixtures are prepared for each latex polymer according to the quantities indicated in Table 2 and by the method as described in Example 1(a).

**Table 2: Slurry Compositions for Various Polymer Latexes (amounts in grams)**

| | **Water** | **Latex** | **GTR** | **FeCl₃ Soln.** |
|---|---|---|---|---|
| Rovace^{™} 661 | 3591 | 909 | 500 | 37.5 |
| Airflex^{™} 500 | 3591 | 909 | 500 | 37.5 |
| UCAR^{™}DM171 | 3500 | 1000 | 500 | 37.5 |
| Rhoplex^{™} 2200 | 3500 | 1000 | 500 | 37.5 |

The polymer/rubber slurries shown in Table 5 are further processed by the methods described in Examples 2 and 3 to produce composite roof membranes.

### Example 6. Solar Reflectivity of Polymer-Rubber Composite Roof Membranes

The polymer-rubber roof membranes are black as initially processed. In some higher temperature climates, it is desirable that the roof coating is able to reflect solar light so that the building does not absorb too much heat. Samples 1-3 of Table 1 were subjected to various treatments to see if solar reflectivity is possible with these black roof membranes. Table 3, below gives the formulation for ARM 91-1, used as a solar reflectivity coating in Table 4.

**Table 3. ARM 91-1 Formulation**

| Material | Type | Source | Amount (weight, g) |
|---|---|---|---|
| Grind | | | |
| Water | | | 152.50 |
| Tamol^{™} 850 (30%) | Dispersant | Rohm and Haas ¹ | 4.80 |
| KTPP ⁹ | Dispersant | FMC Corp. ² | 1.40 |
| Nopco^{™} NXZ | Defoamer | Henkel Corp. ³ | 1.90 |
| Duramite^{™} | CaCO3 Filler | ECC America, Inc ⁴ | 422.20 |
| TI-Pure^{™} R-960 | TiO2 Pigment | E.I. DuPont ⁵ | 70.40 |
| Kadox^{™}-915 | ZnO Pigment/Filler | ZINC Corp. ⁶ | 46.90 |
| | | | |
| Let Down | | | |
| Rhoplex^{™} EC-1791 (55%) | Acrylic Polymer | Rohm and Haas ¹ | 470.60 |
| Nopco^{™} NXZ | Defoamer | Henkel Corp. ³ | 1.90 |
| Texanol^{™} | Coalescent | Eastman Chemical ⁷ | 7.00 |
| Skane^{™} M-8 | Mildewcide | Rohm and Haas ¹ | 2.10 |
| Ammonia (28%) | | | 1.00 |
| Propylene Glycol | | | 24.40 |
| Natrosol^{™} 250 MXR | Thickener | Aqualon, Inc. ⁸ | 4.20 |
| | | | |
| Total | | | 1211.30 |

| | | | |
|---|---|---|---|
| 1. Rohm and Haas Company, Philadelphia, PA, USA. 2. FMC Corp., Philadelphia, PA, USA. 3. Henkel Corp., Ambler, PA, USA. 4. ECC America, Inc., Atlanta, GA, USA. 5. E.I. DuPont de Nemours & Co., Inc., Wilmington, DE, USA. 6. ZINC Corp. of America, Monaca, PA, USA. 7. Eastman Chemical Company, Kingsport, TN, USA. 8. Aqualon, Hercules Inc., Wilmington, DE,USA. 9. KTPP: potassium tripolyphosphate. | | | |

**Table 4: Solar Reflectivity of Composite Roof Membranes from AC-261 and GTR**

| **Sample** | **Composition Preparation** | **/ No Treatment** | **Treated with a white formulated coating** **(ARM 91-1) ³** | **Ti02 Surface Deposited** | **Foil Coated** |
|---|---|---|---|---|---|
| 1 | GTR/AC-261 Cold Blend | 5.5 | 84.9 | 49.7 | 86.6 |
| 2 | GTR/AC-261 Pan Milled ¹ | 5.4 | 84.2 | 47.8 | 86.7 |
| 3 | GTR/AC-261 Disk Milled ² | 6.1 | 85.6 | 53.5 | 86.6 |
| 4 | EPDM Rubber | 5.4 | - | - | - |

| | | | | | |
|---|---|---|---|---|---|
| 1. The sample was run through the pan mill 5 times before isolating the solids and reducing the water content. 2. The sample was run through the disk mill once before isolating the solids and reducing the water content. 3. ARM91-1 formulation; see Table 3, above. | | | | | |

The black membrane samples were treated with:
a) 10 wet mils of elastomeric roof coating formulation ARM 91-1 (Table 3) and allowed to dry, b) TiO2 powder sprinkled on the membrane at the extruder, and c) a coated foil glued to the black membrane with adhesive. Solar Reflectivity values were measured using ASTM C1549 to assess the performance as a cool, high-solar-reflective roof surface, on a scale of 0-100, with higher numbers denoting better reflectivity. The data in Table 4 show that the black polymer-rubber roof membrane can be treated to give a solar reflective roof membrane. It is anticipated that the use of a white acrylic plastic sheet could also be used over the black membrane to increase solar reflectivity.

### Example 7. Low Temperature Flexibility of Polymer/Rubber Composite Membrane

The flexibility of a thermoplastic composite is important in many end-use applications, including roof membranes. The polymer/rubber composites were tested for low temperature flexibility according to the Mandrel Bend Test (ASTM test D552), which measures the resistance to cracking of rubber-type materials. The polymer/rubber membrane (0.102 cm thickness, or 40 mil) was bent over a cylindrical mandrel of specified diameter and at a specified low temperature (0.32 cm, or 1/8 inch at 32°F; 1.59 cm or 5/8 inch at 15°F; and 2.54 cm or 1 inch at 5°F) for a 1 second time period and evaluated for cracking. The test is evaluated on a "pass" (P) / "fail" (F) basis according to whether cracking occurs at a given mandrel diameter and at the given temperature (Table 3, below).

**Table 5: Low Temperature Flexibility of Composite Roof Membranes**

| **Sample** | **Composition / Preparation** | **Low Temp Flex** **(32°F)** **1/8 inch Mandrel** | **Low Temp Flex** **(15°F)** **5/8 inch Mandrel** | **Low Temp Flex** **(5°F)** **1 inch Mandrel** |
|---|---|---|---|---|
| 1 | GTR/AC-261 Cold Blend | Fail | Fail | Fail |
| 2 | GTR/AC-261 Pan Milled ¹ | Pass | Pass | Pass |
| 3 | GTR/AC-261 Disk Milled ² | Pass | Pass | Fail |
| 4 | APP³ Membrane | Pass | Pass | Fail |
| | SBS⁴ Membrane | Pass | Pass | Pass |

| | | | | |
|---|---|---|---|---|
| 1. The sample was run through the pan mill 5 times before isolating the solids and reducing the water content. 2. The sample was run through the disk mill once before isolating the solids and reducing the water content. 3. APP=Atactic Polypropylene Modified Bitumen Roof membrane. 4. SBS = Styrene-Butadiene-Styrene Modified Bitumen Roof Membrane | | | | |

The data show that the simple cold blending approach fails the low temperature flexibility test under all conditions studied and that better flexibility results from the pan milling or disk milling methods.

### Example 8. Water Swelling of Polymer/Rubber Membrane made from Washed and Unwashed Polymer/Rubber

In the process to prepare the inventive roof membranes, the copolymer is provided as either a coagulated latex polymer or as a suspension polymer. This is important not only to provide a similar particle size to that of the rubber particles to aid in intimate contact during shear of the solids, but also to allow facile isolation of the solids from the mixture after the solid state shear pulverization.

Without coagulation, or the use of suspension polymers, the latex polymer solids that emerge from the milling process essentially pass through the filter, and the filtrate solids are almost unaltered with respect to the latex polymer.

The ability to isolate the solids in the slurry after milling allows the composite mixture to be washed. The residual hydrophilic components in the slurry, such as the coagulants and surfactants, can affect the final product negatively. In the table below, Table 6, the coagulated composite mixture obtained from the milling process was filtered through a 10 micron filtration bag and the solids then redispersed in water and refiltered twice, effectively washing the sample to remove residual hydrophilics. The composite mixture was processed as described in Example 3(a) and 3(b). The water sensitivity of the final solid composite materials, after extrusion, was determined by soaking a piece of the membrane in water and then, after drying off the surface water, measuring the water absorption over time. The water absorption was calculated as the weight % of water absorbed relative to the weight of the composite.

**Table 6: Effect of Washing Slurry Components on the Water Absorption of Polymer-Rubber Roof Membranes**

| | Water Absorption (wt. %) ¹ 7 day soak |
|---|---|
| Roof Membrane ² with no wash | 13.4 |
| Roof Membrane ² washed twice | 6.6 |

| | |
|---|---|
| 1. Water swelling by ASTM D471, soak time = 7days at 120°F 2. Roof Membrane is Sample 3 above (Table 1), obtained by disk milling. | |

The roof membrane prepared from solids that were filtered out and redispersed in water (and therefore washed) showed much lower water absorption upon prolonged soaking. Many roofing applications require minimal water absorption, for example less than 10% water absorption, or less than 5% water absorption, upon soaking in water over a period of 7 days, or over a period of 20 days, or longer, as the application may dictate.

## Claims

1. A roof membrane made by a process comprising:
(a) coagulating one or more aqueous polymer dispersion to produce a coagulated aqueous polymer dispersion with a weight average particle size of from about 1 micron to about 1,000 microns;
(b) combining particles of one or more crosslinked rubber with the aqueous polymer dispersion, before or after coagulating the aqueous polymer dispersion, to form an aqueous dispersion mixture in aqueous dispersion;
(c) subjecting the aqueous dispersion mixture to solid state shear pulverization and thereby producing a pulverized mixture;
(d) reducing the moisture content of the mixture; and
(e) forming the roof membrane;
wherein the coagulating of the one or more aqueous polymer dispersion may be carried out either prior to combining with the particles of crosslinked rubber, or in the presence of the particles of the crosslinked rubber.

2. The roof membrane of claim 1 wherein the process further comprises extruding the pulverized mixture to form the roof membrane.

3. The roof membrane of claim 1 wherein the particle size of the crosslinked rubber is 43 micron sieve particle size (325 mesh) or more, or 11,100 micron sieve particle size (2 mesh) or less.

4. The roof membrane of claim 1 wherein the crosslinked rubber is obtained, at least in part, from recycled tires.

5. The roof membrane of claim 1 wherein the aqueous polymer dispersion that is coagulated is obtained from an emulsion polymer dispersion.

6. The roof membrane of claim 1 wherein the coagulated aqueous polymer dispersion is obtained from the waste stream of an emulsion polymer manufacturing facility.

7. The roof membrane of claim 1 wherein reducing the moisture content of the pulverized mixture comprises isolating the solid content of the pulverized mixture.

8. The roof membrane of claim 1 wherein the solid state shear pulverization comprises pan milling or disk milling.

9. The roof membrane of claim 1 wherein the coagulated aqueous polymer dispersion comprises a copolymer having polymerized units of one or more functional monomers with functionality chosen from carboxy acid functionality, phosphorus acid functionality, hydroxy functionality, amine functionality, acetoacetoxy functionality, silyl functionality, epoxy functionality, cyano functionality, isocyanate functionality, and combinations thereof.

10. The roof membrane of claim 1 wherein the roof membrane is further crosslinked during processing, which processing comprises one or more of kneading, or extrusion, or two-roll milling, or heat molding, or compression molding.

11. The roof membrane of claim 1 wherein the process further comprises coating the membrane with a white coating or overlaying or laminating an acrylic sheet or PVC sheet or foil sheet on the roof membrane.

12. A roof membrane made by a process comprising:
(a) combining particles of one or more crosslinked rubber with an aqueous polymer dispersion to form an aqueous dispersion mixture in aqueous dispersion;
(c) subjecting the aqueous dispersion mixture to solid state shear pulverization;
(d) reducing the moisture content of the mixture; and
(e) forming a roof membrane;
wherein the aqueous polymer dispersion is obtained by suspension polymerization.
